# EUROPÄISCHE PATENTSCHRIFT

(11) **EP 1 456 422 B1**
(45) Veröffentlichungstag und Bekanntmachung des Hinweises auf die Patenterteilung: **18.08.2010**
(21) Anmeldenummer: 02793082.5
(22) Anmeldetag: 19.12.2002
(51) Int. Cl.: C21D 9/67, C21D 1/76

(54) **VERFAHREN ZUR VERMEIDUNG VON KLEBERN UND KRATZERN BEIM REKRISTALLISATIONSGLÜHEN VON KALTBAND**
METHOD FOR AVOIDING ADHESIONS AND SCRATCHES DURING RECRYSTALLIZATION ANNEALING OF COLD ROLLED STRIPS
PROCEDE POUR EVITER L'APPARITION D'ADHERENCES ET D'EGRATIGNURES LORS DU RECUIT DE RECRISTALLISATION D'UN FEUILLARD LAMINE A FROID

(30) Priorität: 19.12.2001 DE 10162702
(43) Veröffentlichungstag der Anmeldung: 15.09.2004
(73) Patentinhaber: Air Liquide Deutschland GmbH, 40235 Düsseldorf (DE); Messer Group GmbH, 65843 Sulzbach (DE)
(72) Erfinder: SCHMIDT, Hans-Peter, 40822 Mettmann (DE); GROGNET, Philippe, F-75019 Paris (FR)
(74) Vertreter: Kahlhöfer, Hermann
(86) Internationale Anmeldenummer: PCT/EP2002/014553
(87) Internationale Veröffentlichungsnummer: WO 2003/052148

(56) Entgegenhaltungen:
- EP-A- 0 560 172
- DE-A- 19 531 447
- DE-A- 19 840 778
- US-A- 3 873 377
- ENGHOFER R A ET AL: "EXPERIENCE WITH 100% HYDROGEN ANNEALING AT LTV'S INDIANA HARBOR NO. 3 SHEET MILL" IRON AND STEEL ENGINEER, ASSOCIATION OF IRON AND STEEL ENGINEERS. PITTSBURGH, US, Bd. 67, Nr. 3, 1. März 1990 (1990-03-01), Seiten 25-29, XP000141232 ISSN: 0021-1559

## Beschreibung

Die Erfindung betrifft ein Verfahren zur Vermeidung von Klebern und Kratzern beim Rekristallisationsglühen von Kaltband in Haubenöfen unter einem Wasserstoff enthaltenden Schutzgas, mit den Phasen Aufheizen, Halten und Abkühlen, wobei während der Haltephase das Kaltband einer Atmosphäre mit einem oxidierend wirkenden Partialdruckverhältnis P(CO₂)/P(CO) >1 ausgesetzt wird, das durch Zumischen eines Oxidationsmittels zum Schutzgas eingestellt wird.

Kaltband wird in Form von Festbunden, sogenannten Coils, in Topf-, Hauben- oder Rollendurchlauföfen geglüht. Beim rekristallisierenden Glühen in geschlossenen Ofenanlagen, wie z. B. Haubenöfen aller Art, entstehen oft zwischen den Windungen des Kaltbandes Diffusionsverschweißungen, sogenannte Bandkleber. Diese verursachen beim Abhaspeln einen erhöhten Abwickelwiderstand, wodurch auf der Bandoberfläche Auf- und Abrisse, Kratzer und andere Schäden (Dellen/Beulen) entstehen können.

Verfahren zum Vermeiden von Klebern beim Glühen von Kaltband sind beispielsweise aus der EP 0 560 173 A1 und der DE 195 31 447 A1 bekannt.

Ein gattungsgemäßes Verfahren zur Vermeidung derartiger Beschädigungen ist aus der DE-A1 195 31 447 bekannt. Darin wird vorgeschlagen, während der Haltephase eine Oxiddeckschicht zu bilden, die einen Schutz gegen das Zusammenkleben der einzelnen Windungen des Kaltbandes bildet. Die Ausbildung einer Deckschicht wird insbesondere auch in einem Schutzgas mit einem Wasserstoffanteil bis zu 100% erreicht, indem dem Schutzgas CO₂ zugeführt wird und währenddessen ein starkes Ungleichgewicht der homogenen Wassergasreaktion eingestellt wird. Der Ablauf der Reaktion

H₂ + CO₂ = CO + H₂O

wird nahezu vollständig unterbunden, so dass die Ausbildung einer Oxiddeckschicht ermöglicht wird.

Fe + CO₂ = FeO_{Wüstit} + CO

Ein oxidierend wirkendes Partialdruckverhältnis P(CO₂)/P(CO) wird bei dem bekannten Verfahren erzeugt, indem dem Schutzgas der Ofenatmosphäre 0,3 bis 0,6 g Kohlendioxid pro m² Bandoberfläche der Ofenatmosphäre zugemischt werden, wobei sich über den Zerfall (Dissoziation) der beigemischten CO₂-Menge gemäß der Gleichung

CO₂ = CO + 0,5 O₂

ein aus dieser Reaktion resultierender Sauerstoffpartialdruck in der Schutzgasatmosphäre einstellt. Der O₂-Partialdruck lässt sich somit auch als Quotient der Partialdrücke P_{CO2} und P_{CO} definieren. Zur Bildung der Deckschicht darf dieses Partialdruckverhältnis während der Haltephase im stationären Zustand (oberhalb 600°C) nicht kleiner 1 werden.

Zwar gewährleisten dicke oxidische Deckschichten, dass Bandkleber nicht auftreten. Es hat sich aber gezeigt, dass sich derartige Deckschichten nicht mehr rückstandsfrei entfernen lassen. Andererseits führen Versuche, die Ausbildung dicker Deckschichten zu vermeiden, bei der Behandlung von Kaltband in Hochkonvektionsöfen mit wasserstoffreicher Schutzgas-Atmosphäre unvorhersehbar zu Bandklebern.

Der Erfindung liegt daher die Aufgabe zugrunde, das bekannte Verfahren hinsichtlich der Reproduzierbarkeit bei der Vermeidung von Bandklebern beim Glühen von Kaltband unter Schutzgas mit einem hohen Wasserstoffanteil (>5%) zu verbessern, ohne dass hierfür die Ausbildung dicker, oxidischer Deckschichten erforderlich ist.

Diese Aufgabe wird ausgehend von dem eingangs beschriebenen Verfahren erfindungsgemäß dadurch gelöst, dass das Oxidationsmittel mit einem Frischgas, das Kohlendioxid in einer.Konzentration von maximal 40 Vol.-% und Wasserstoff enthält, zugeführt wird, wobei das Partialdruckverhältnis des sich bildenden Wassers und Wasserstoffs in der Ofenatmosphäre ermittelt und geregelt wird.

Im Unterschied zum bekannten Verfahren wird beim erfindungsgemäßen Verfahren dem Schutzgas während der CO₂/H₂-Behandlung Kohlendioxid in einer vergleichsweise geringen Menge zugeführt. Das Kohlendioxid wird einem Frischgas in einer Konzentration von maximal 40 Vol.-% beigemischt, das außerdem Wasserstoff enthält. Dadurch stellt sich während der Haltephase eine nur gering oxidierend wirkende Atmosphäre ein. Diese führt nicht zur Ausbildung einer dicken Oxiddeckschicht auf dem Kaltband, sondern bewirkt lediglich eine oberflächliche Adsorption von atomaren Sauerstoff, wobei die sich bildende Sauerstoff-Adsorptionsschicht zur Vermeidung von Bandklebern einerseits vollständig ausreicht und andererseits durch Blankglühen rückstandsfrei entfernt werden kann.

Beim erfindungsgemäßen Verfahren werden Bandkleber somit nicht durch Ausbildung einer deckenden Oxidschicht vermieden, sondern eher durch stationär ablaufende Oberflächenreaktionen der Metalloberfläche mit den Komponenten der Ofen-Atmosphäre, was sich durch folgende Gleichung beschreiben lässt:

CO₂ = CO + (O)_{adsorbiert}

(O)_{adsorbiert} + H₂ = H₂O

Diese Verfahrensweise wird jedoch nur dadurch ermöglicht, dass das Partialdruckverhältnis des sich bildenden Wassers und Wasserstoffs in der Ofenatmosphäre ermittelt und geregelt wird. Die Regelung dieses Partialdruckverhältnisses erlaubt die reproduzierbare Ausbildung einer möglichst dünnen Adsorptionsschicht, die trotzdem Bandkleber zuverlässig vermeidet.

Die Messung des Partialdruckverhältnis des sich bildenden Wassers und Wasserstoffs in der Ofenatmosphäre erfolgt mittels einer innerhalb des Haubenofens angeordneten Sauerstoffsonde oder mittels einer Lambda-Sonde. Mit diesem Messwert kann das stationäre CO₂/CO-Verhältnis der Ofenatmosphäre ermittelt werden, das proportional zum Partialdruckverhältnis des sich bildenden Wassers und Wasserstoffs ist. Anhand des ermittelten CO₂/CO-Verhältnisses wird die Zufuhr des Frischgases, insbesondere des Gehalts an CO₂, H₂ oder eines Gemischs von H₂ und CO₂ auf den oben genannten CO₂-Sollwert im Schutzgas geregelt.

Beim Einsatz einer Sauersfoffsonde wird deren Sondenspannung über das Partialdruckverhältnis von H₂O/H₂ bestimmt, nicht über das Verhältnis von CO₂/CO Der sich einstellende H₂O-Gehalt ist dem CO-Gehalt direkt proportional. Damit ergibt sich auch eine gewisse Regelung des Gehalts an Kohlendioxid in der Ofenatmosphäre. Es hat sich aber gezeigt, dass das tatsächlich herrschende CO₂/CO-Partialdruckverhältnis in den Coil-Windungen der Bandoberfläche deutlich geringer ist, als das von der Sonde oder den Messgeräten Gemessene.

Vorzugsweise wird das Oxidationsmittel mit einem Frischgas, das Kohlendioxid in einer Konzentration von maximal 30 Vol.-% und Wasserstoff enthält, zugeführt. Durch den geringen Kohlendioxid-Gehalt-wird die Ausbildung einer dicken Oxiddeckschicht sicher vermieden.

Im Hinblick hierauf hat es sich auch bewährt, wenn das Frischgas Kohlendioxid in einer Konzentration von weniger als 0,4 g pro m², vorzugsweise weniger als 0,3 g pro m² (bezogen auf die Kaltbandoberfläche), enthält.

Das Kohlendioxid wird einem der Ofenatmosphäre ebenfalls zugeführten Frischgas beigemischt, das außerdem Wasserstoff enthält. Dadurch stellt sich während der Haltephase eine nur gering oxidierend wirkende Atmosphäre ein und die Ausbildung einer dicken Deckschicht wird sicher vermieden. Bei einem Frischgas aus CO₂ und H₂ ergibt sich aufgrund einer Menge von 0,3 g CO₂ pro m² Kaltbandoberfläche eine Gaszusammensetzung von etwa 21% CO₂ und 79% H₂. Dabei ist aber zu beachten, dass weniger die Frischgas-Zusammensetzung, sondern das stationäre CO₂/CO-Verhältnis im Behandlungsraum für die Antikleberwirkung verantwortlich ist. Das aktuelle, stationäre CO₂/CO-Verhältnis ist jedoch auch von anderen Parametern abhängig, insbesondere von der Temperaturverteilung im Ofen und der Verweilzeit des Gases im Behandlungsraum.

Es hat sich als besonders vorteilhaft erwiesen, in einem Mischbehälter ein Gasgemisch aus Kohlendioxid und Wasserstoff bereitzustellen, und das Gasgemisch dem Haubenofen als Frischgas zuzuführen.

Ein vorab erzeugtes Wasserstoff/Kohlendioxid-Gasgemisch verringert den Regelungsaufwand für die Gaszufuhr und vermindert Fehldosierungen, die beim Zumischen von CO₂ zu einem Wasserstoffstrom auftreten können, etwa infolge sich ändernder Druck- und Strömungsverhältnisse innerhalb der Haube. Da das Dosieren von Wasserstoff aus Sicherheitsgründen immer zu gewährleisten ist, ist auch das Dosieren des anstelle dessen dem Haubenofen zugeführten Wasserstoff/Kohlendioxidgemisches immer gewährleistet. Die Herstellung des Gasgemischs aus H₂/CO₂ erfolgt vorzugsweise mittels eines handelsüblichen Gasemischgeräts, zum Beispiel einem "Witt-Mischgerät". Es hat sich gezeigt, dass ein H₂/CO₂-Gasgemisch mit der oben genannten Kohlendioxid-Konzentration von maximal 40 Vol.-%, vorzugsweise maximal 30 % (der Rest ist Wasserstoff) für die meisten Glühprogramme (abhängig von Material, Glühtemperatur, Haltezeit usw.) geeignet ist. Ein Gasgemisch mit einer Kohlendioxid-Konzentration von rund 25 Vol.-% hat sich im Hinblick hierauf als optimal erwiesen.

Das erfindungsgemäße Verfahren umfasst eine Behandlung des Kaltbandes in CO₂/H₂-haltiger Ofenatmosphäre während der Haltephase. Diese Behandlung wird aber vorzugsweise auch noch zu Beginn der Abkühlphase weitergeführt, wobei das Behandlungsende in der CO₂/H₂-haltigen Ofenatmosphäre durch eine Coiltemperatur von nicht weniger als 450 °C vorgeben wird.

Zumindest zu Beginn der Abkühlphase wird die Sauerstoff-Adsorptionsschicht auf der Bandoberfläche nicht zerstört, sondern bleibt erhalten und wird aufgrund der niedrigeren Temperatur eher noch etwas verstärkt. Eine Verringerung der CO₂-Zufuhr zu Beginn der Abkühlphase ist nicht günstig und aus technischer Sicht unvorteilhaft, da dies einen aufwendigeren Regelprozess erfordert, und sich somit leichter Fehler einstellen können. Das Ende der Behandlung kann durch die vorherrschende Coiltemperatur, die z. B. am Sockelboden gemessen wird, oder auch durch eine fest eingestellte Zeit gewählt werden. Beide Verfahrensweisen sind möglich und welche eingesetzt wird, hängt oftmals von den technischen Gegebenheiten vor Ort und der Ofensteuerung ab.

Erfindungsgemäß wird während der Abkühlphase eine Kohlenstoffaktivität von mindestens 100 eingestellt.

Die vergleichsweise hohe Kohlenstoffaktivität auf der Bandoberfläche während des Abkühlphase beruht auf den Reaktionen:

2 CO = C + CO₂

CO + H₂ = C + H₂O

Die Spülung mit Wasserstoff während der Abkühlphase wirkt zwar einer Erhöhung der Kohlenstoffaktivität entgegen. Diese Wirkung kann aber durch den gleichzeitig einsetzenden Temperaturabfall, der in Richtung einer Erhöhung der Kohlenstoffaktivität wirkt, kompensiert werden, wenn dafür Sorge getragen wird, dass trotz Wasserstoffspülung Konzentrationen im Bereich von 3-5% CO, 3-5% CO₂, 3-5% H₂O (Rest Wasserstoff) im Haubenraum noch vorhanden sein (die Angaben beziehen sich auf Bandtemperatur von ca. 400°C). Es ist daher darauf zu achten, dass durch die Spülung mit Wasserstoff die genannten Konzentrationsbereiche während der Abkühlphase nicht unterschritten werden.

Bei dieser Verfahrensweise werden besonders wenig Bandkleber beobachtet. Dies kann damit erklärt werden, dass es infolge der hohen Kohlenstoffaktivität zu einer gewissen Belegung an Kohlenstoff auf der Bandoberfläche kommt, die neben der im Verlauf der Haltephase ausgebildeten Sauerstoff-Adsorptionsschicht zur Verringerung der Kleberneigung beiträgt.

Die Spülung mit dem H₂-haltigen Frischgas erweist sich während der weiteren Abkühlphase als besonders wichtig. Denn die H₂-Spülung verdünnt die übrigen Gaskomponenten der Schutzgasatmosphäre, stabilisiert und verringert insbesondere laufend das H₂O/H₂-Verhältnis, das andernfalls während der Abkühlung (aufgrund der niedrigeren Temperaturen) zu einer Oxidation des Kaltbandes führen könnte.

Nach Ablauf der Haltezeit stellt sich bei fortwährender Behandlung des Kaltbandes in der CO₂/H₂-haltigen Ofenatmosphäre ein Wassergehalt von 4 bis 8,5 Vol.-% H₂O ein. Die Taupunkte liegen dementsprechend bei +29°C und +45°C, so dass Wasser an kälteren Stellen kondensieren kann. Es besteht somit die Gefahr der Eisenoxidation während der Abkühlphase. Um dies zu vermeiden, darf die dosierte Wasserstoffmenge nicht zu gering sein; die Wasserstoff-Spülmenge sollte zwischen 3 und 4 m³ H₂ pro Stunde betragen, um einen ausreichenden Verdünnungseffekt zu erzielen. Es hat sich somit bewährt, das Kaltband während der Abkühlphase in reduzierender Atmosphäre zu behandeln, wobei die Behandlungsdauer mindestens 1 Stunde beträgt.

Dadurch wird eine während der Haltephase erzeugte Sauerstoff-Adsorptionsschicht wieder vollständig und rückstandsfrei entfernt.

In einer besonders bevorzugten Verfahrensweise, bei der ein Frischgas mit einer Zusammensetzung von 15 Vol% bis 25 Vol% CO₂, Rest H₂ eingesetzt wird, wird im Ofengas ein H₂O-Gehalt zwischen 4% und 8,5% eingestellt.

Es stellt sich dabei im Ofenraum ein günstiges stationäres CO₂/CO-Verhältnis von 2,5 bis 4,0 ein, wodurch die Kleberbildung verhindert wird. Dabei ist aber zu beachten, dass nicht nur die Mengen an Frischgas und Kohlendioxid für das sich einstellende stationäre CO₂/CO-Verhältnis verantwortlich sind, sondern eine Vielzahl von Einflussgrößen, wie: die Behandlungstemperatur und Temperaturverteilung, die Verweilzeit des Gasgemisches im freien Ofenraum, die Ventilatorleistung, die Chargenoberfläche u. a. m.. Die Kontrolle und Regelung der Behandlung berücksichtigt alle diese Einflussgrößen und kompensiert ihre spezielle Wirkungen auf das sich einstellende stationäre CO₂/CO-Verhältnis. Bei einem CO₂/CO-Verhältnis von weniger als 2,5 werden Kleber erzeugt, während sich bei einem CO₂/CO-Verhältnis von mehr als 4,0 eine Oxidschicht bilden kann, die kaum noch rückstandsfrei zu entfernen ist.

Eine weitere Verbesserung ergibt sich dadurch, dass zu Beginn der Abkühlphase eine Abkühlgeschwindigkeit von maximal 100°C/h, vorzugsweise von maximal 80°C/h, eingestellt wird. Die vergleichsweise langsame Abkühlung gewährleistet, dass der Temperaturgradient innerhalb der jeweiligen Windungen nicht zu groß wird und dadurch die Schrumpfung der einzelnen Windungen gering ist, so dass der Berührungsdruck der Bandoberflächen klein ist.

Aus Sicherheitsgründen werden zum Abschalten und Einschalten der Frischgaszufuhr zum Haubenofen vorzugsweise Magnetventile eingesetzt.

Es hat sich als günstig erwiesen, das Partialdruckverhältnis des sich bildenden Wassers und Wasserstoffs in der Ofenatmosphäre mittels eines Sauerstoffsonde zu ermitteln.

Mittels des Sauerstoffsonde wird das stationäre CO₂/CO-Verhältnis der Ofenatmosphäre gemessen und anhand des ermittelten Messwerts die Zufuhr des Frischgase, insbesondere des Gehalts an CO₂, H₂ oder eines Gemischs von H₂ und CO₂ auf den oben genannten CO₂-Sollwert im Schutzgas geregelt. Die permanente Messung des H₂O/H₂-Verhältnisses mit einer Sauerstoffsonde ist auch sinnvoll, um die Mindestmenge an Spülwasserstoff zu ermitteln. Die Mindestmenge an Spülwasserstoff ist vom Ende der CO₂-/H₂-Behandlung abhängig: je länger diese Behandlung in der Abkühlphase fortgeführt wird, umso größer muss die Spülmenge sein.

Nachfolgend wird die Erfindung anhand eines Ausführungsbeispiels und einer Zeichnung näher erläutert: In der Zeichnung zeigen im einzelnen:
- **Figur 1:**: Ein Diagramm zum Temperatur- und Spannungsverlauf bei der Durchführung des erfindungsgemäßen Verfahrens,
- **Figur 2:**: Ein Diagramm zum Verlauf der Coil-Temperatur und der Gaszusammensetzung (CO₂, CO,H₂O, CH₄) beim Erzeugen der Sauerstoff- Adsorptionsschicht
- **Figur 3:**: Ein Diagramm zum Verlauf der Coil-Temperatur und der stationären CO₂/CO- Verhältnisse bei unterschiedlichen Gaszusammensetzungen während der Halte- und der Abkühlphase,
- **Figur 4:**: Ein Diagramm zum Verlauf der stationären CO₂/CO-Verhältnisse bei einer der beiden Gaszusammensetzungen gemäß Figur 3 und der entsprechenden Spannung einer Messsonde, und
- **Figur 5:**: ein Schaubild für eine geeignete Gasversorgung des Haubenofens zur Durchführung des erfindungsgemäßen Verfahrens.

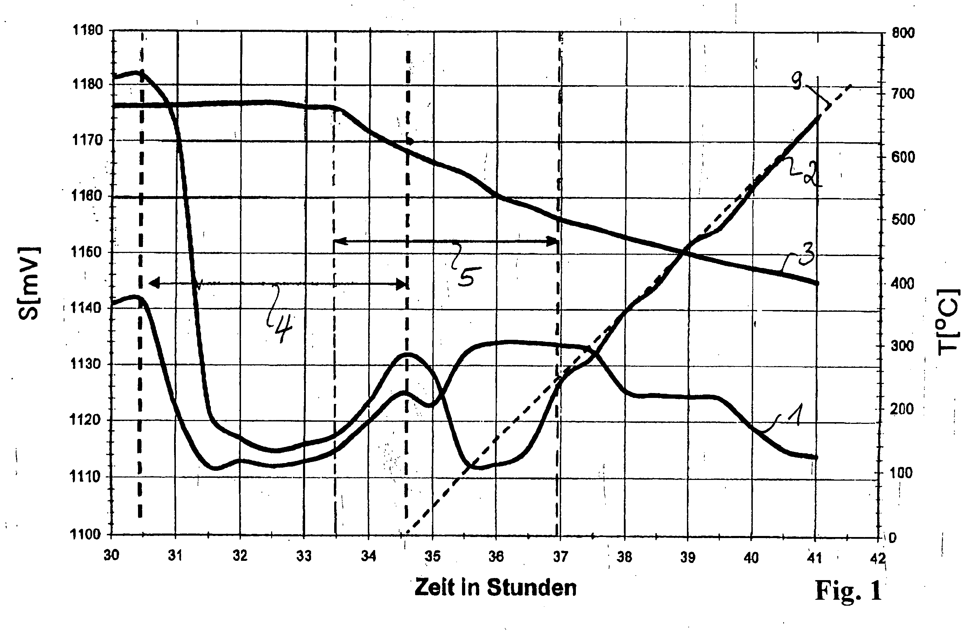

In **Figur 1** zeigen als Funktion der Behandlungszeit (in Stunden):
   - Kurve 1 den Verlauf des Sauerstoff-Partialdrucks (ausgedrückt als Spannung "S" einer Lambdasonde in mV),
   - Kurve 2 den Verlauf des Partialdruckverhältnisses H₂O/H₂ (ebenfalls ausgedrückt als Spannung "S" einer Sonde in mV) und
   - Kurve 3 die im Bereich der Coils gemessene Temperatur "T" (in Grad Celsius; in der Mitte der Coils gemessen) Aus der Coil-Temperatur lässt sich der Temperatureinfluss der Oberflächenreaktionen ableiten.

Die erfindungsgemäße Behandlung umfasst im Wesentlichen eine Phase der CO₂-Beimischung (CO₂/H₂-Behandlung = "Antikleber-Behandlung"), die mit der Bezugsziffer 4 gekennzeichnet ist, und eine Abkühlphase 5, die nach einer Behandlungsdauer von etwa 33,5 Stunden mit dem "Ziehen des Ofens" beginnt und deren Ende hier bei einer Coil-Temperatur von 500°C definiert wird. Die CO₂-Behandlung wird nicht unmittelbar zu Beginn der Abkühlphase 5 beendet, sondern sie dauert auch während der Abkühlphase 5, noch an und wird fortgeführt, bis eine Temperatur von etwa 600°C erreicht ist. Die während der Behandlungsphase 4 mit einer CO₂-Menge von 0,29 g pro m² Glühgutoberfläche und einem kontinuierlichen Frischgasstrom von 16 m³ Wasserstoff/h auf den Coils aufgebauten Sperrschichten verhindern das Zusammenkleben der einzelnen Windungen. Das Partialdruckverhältnis von Wasser und Wasserstoff in der Ofenatmosphäre wird mittels einer Sauerstoffsonde erfasst und während der Behandlungsphase 4 in einem Zeitabschnitt zwischen Stunde 31 und 33,5 geregelt. Die Sondenspannung beträgt dabei etwa 1115 mV. Die Erfassung und Regelung des Partialdruckverhältnisses P H₂O/H₂ ermöglicht die Bildung einer dünnen Sauerstoff-Adsorptionsschicht auf der Bandoberfläche, die Kleber sicher verhindert. Dies wird im Folgenden näher erläutert.

Nach Beenden dieser Antikleber-Behandlung wird der Haubeninnendruck durch taktweises Zuleiten von 2 m³ Wasserstoff pro Stunde konstant auf ca. 18 mbar gehalten. Weiterhin wird durch diesen getakteten Wasserstoffstrom das vorhandene Gasgemisch aus dem Behandlungsraum ausgetrieben und somit verdünnt. Den Effekt der Wasserstoffspülung zeigt der Anstieg von Kurve 2 nach Ende der Phase 4 (extrapolierte gestrichelte Kurve 9).

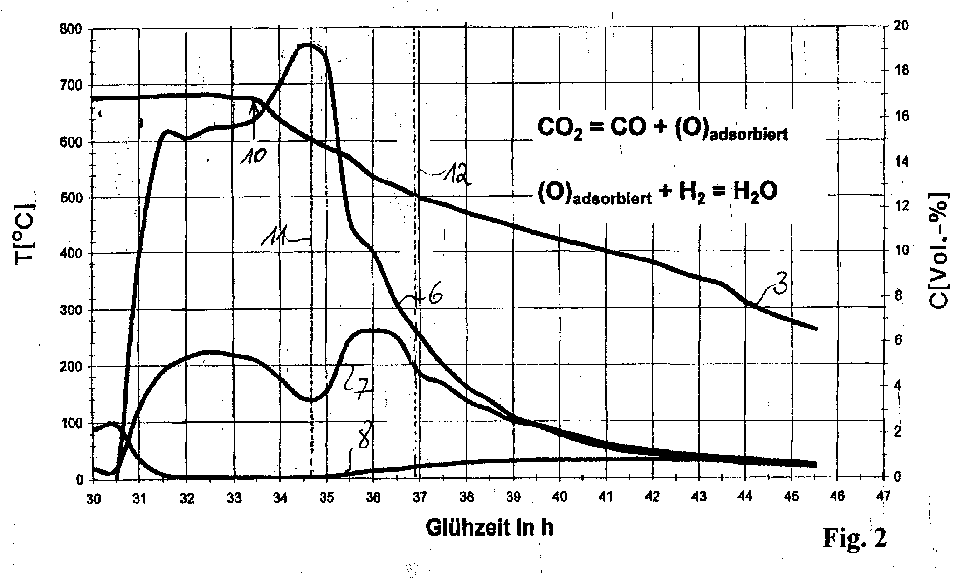

Bis zu einer Coil-Temperatur von ca. 500°C reagiert der Wasserstoff mit dem noch vorhandenen Kohlendioxid zu Wasser und Kohlenmonoxid, mit weiter fallender Temperatur stoppt die Reaktion und das Gasgemisch wird nur noch verdünnt. Dies ist aus **Figur 2** ersichtlich. In Figur 2 zeigen als Funktion der Behandlungszeit (in Stunden):
- Kurve 6 den Verlauf der CO₂-Konzentration "C" in Vol-%,
- Kurve 7 den Verlauf der CO-Konzentration "C" in Vol-% (dieser Wert entspricht gleichzeitig dem Wert der H₂O-Konzentration),
- Kurve 8 den Verlauf der CH₄-Konzentration "C" in Vol-%, und
- Kurve 3 die im Bereich der Coils gemessene Temperatur "T" (in Grad Celsius; in der Mitte der Coils gemessen).

Der Pfeil 10 kennzeichnet den Beginn der Abkühlphase 5 und die punktierte senkrechte Linie 11 symbolisiert das Ende der Phase 4 der CO₂-Beimischung (CO₂/H₂-Behandlung). Im Verlauf der Abkühlphase (bis zu einer Temperatur von 400 °C) wird die CO₂/H₂-Frischgaszufuhr beendet, so dass sich infolge der fallenden Temperatur und der aktuell vorherrschenden Konzentrationen an Kohlenmonoxid, Kohlendioxid, Wasser und Wasserstoff auf der Bandoberfläche durch die eine Kohlenstoffaktivität von etwa 1000 einstellt. Im konkreten Fall sollten bei einer Coiltemperatur von ca. 400°C Konzentrationen von 3-5% CO, 3-5% CO₂, 3-5% H₂O und Rest Wasserstoff noch im Haubenraum vorhanden sein. Es ist daher darauf zu achten, dass durch die Spülung mit Wasserstoff diese Konzentrationsbereiche nicht unterschritten werden.

Die starke Reduktionskraft des Wasserstoffs wirkt nur bis zum Ende der Abkühlphase 5 (etwa ca. 500°C; punktierte senkrechte Linie 12), so dass der Abbau einer evtl. gebildeten Oxiddeckschicht bis dahin vollständig beendet sein muss, damit später keine Oxidreste mehr vorhanden sind. Die bis dahin aufgebaute Sauerstoffadsorptionsschicht wird während der gesamten Abkühlphase nicht vollständig abgebaut, sondern ändert sich in Abhängigkeit der aktuellen Coil-Temperatur und Gaszusammensetzung.

Während der Haltezeit in reiner Wasserstoffatmosphäre und unter konstantem Haubeninnendruck kommt es zur Methan-Bildung. Der dafür notwendige Kohlenstoff stammt von Rußablagerungen im Behandlungsraum und den Crackprodukten der Walzöle, die während der Abdampfphase beim Aufheizen entstanden sind. Die Methanbildung erfolgt demnach durch die Reaktion:

2 H₂ + C_{Coke} = CH₄

Die bei dieser Behandlung sich bildende Methankonzentration beträgt hier 2,5 Vol.-% CH₄. Diese Menge würde sich negativ auf die Einstellung des erforderlichen Sauerstoffpartialdruckes, der für die Sauerstoffbelegung auf der Bandoberfläche ausschlaggebend ist, auswirken. Würde nur CO₂ in den Behandlungsraum zugemischt, dann würde das CO₂ mit dem Methan nach folgender Reaktion reagieren:

CH₄ + CO₂ = 2H₂ + 2 CO

Somit würde das Kohlendioxid so stark abgebaut und CO neu gebildet, dass das Verhältnis der Partialdrücke (P)

P (CO₂) / P (CO) < 1

eingestellt wird und dadurch eine definierte Belegung der Bandoberfläche nicht oder nicht vollständig möglich ist.

Um den Prozess der Sauerstoffbelegung störungsfrei und reproduzierbar durchzuführen, wird deshalb der Methangehalt durch das Begasen mit Frischgas und CO₂ schnell ausgespült. Dadurch wird zwar auch die CO₂-Nutzung vermindert, wobei dieser Effekt aber durch die Regelung des CO₂/CO-Verhältnisses kompensiert wird, indem ständig CO₂-haltiges Gas nachdosiert wird.

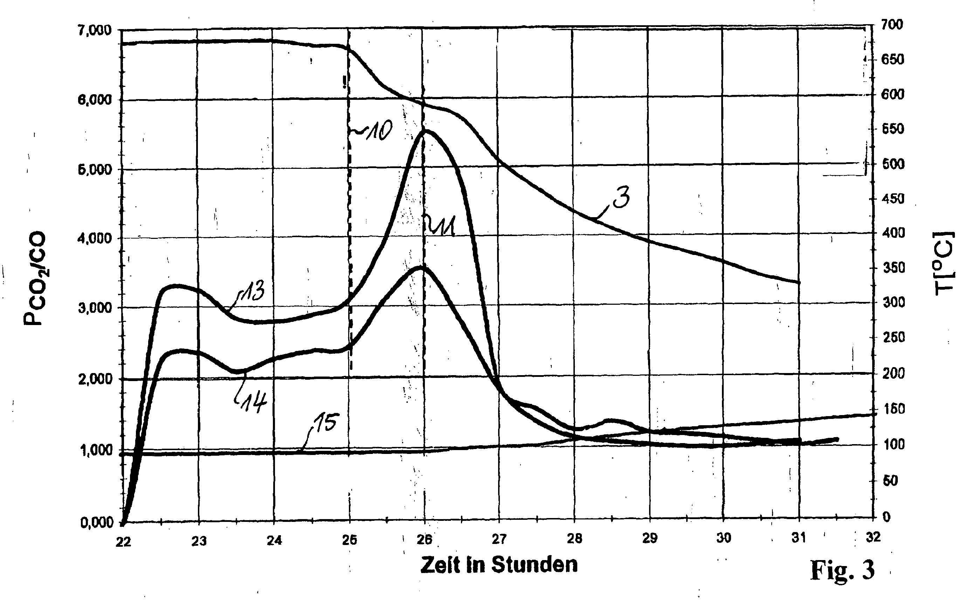

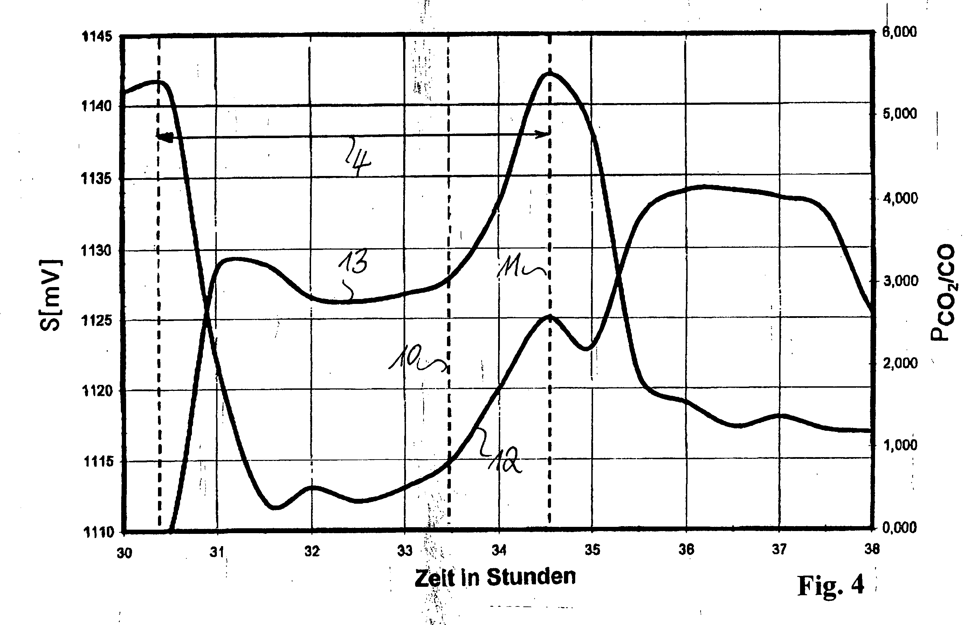

Die Zuverlässigkeit und Genauigkeit der Regelung mit einer Sauerstoffsonde ist aus den Figuren 3 und 4 zu ersehen.

In **Figur 4** sind die an der Sonde gemessene Spannung "S" in mV (Kurve 12), sowie das korrespondierende Partialdruckverhältnis "P" von CO₂/CO (Kurve 13), über der Behandlungszeit (in Stunden) aufgetragen. Im stationären Zustand (etwa von Stunde 32 bis 33,5) ergibt sich ein CO₂/CO-Verhältnis von 3,0 und eine entsprechende Sondenspannung von 1113 +-1 mV. Das so vorgegebene CO₂/CO-Verhältnis von 3,0 erweist sich im Hinblick auf eine Antikleberwirkung bei einer Temperatur von 680°C als besonders günstig. Bei dieser Temperatur wird der stationäre Zustand beendet, indem der Ofen gezogen wird (Linie 10).

Die vorteilhafte Wirkung eines CO₂/CO-Verhältnis von etwa 3,0 ist aus **Figur 3** zu entnehmen. In Figur 3 zeigen als Funktion der Behandlungszeit (in Stunden):
- Kurve 13, einen ersten Verlauf des CO₂/CO-Partialdruckverhältnisses "P" (entspricht der Kurve 13 in Figur 4),
- Kurve 14, einen zweiten Verlauf des CO₂/CO-Partialdruckverhältnisses "P",
- Kurve 15, den theoretischen Verlauf des CO₂/CO-Partialdruckverhältnisses "P", welches im chemischen Gleichwicht mit einer Fe₃O₄-Oberfläche (kleiner 570°C) und einer FeO-Oberfläche (größer 570°C) steht, und
- Kurve 3 die im Bereich der Coils gemessene Temperatur "T" (in Grad Celsius).

Bei einem Verlauf des CO₂/CO-Partialdruckverhältnisses entsprechend Kurve 13 traten keine Kleber auf, was die Wirkung des optimalen CO₂/CO-Partialdruckverhältnisses verdeutlicht. Demgegenüber wurden bei einem Verhältnis von 2,2 (Kurve 14) verstärkt Kleber beobachtet. Es gibt somit einen Grenzwert für das CO₂/CO-Verhältnis, der überschritten werden muss, um die gewünschte Antikleberwirkung zu erhalten.

Aufgrund der unterschiedlichen Behandlungstemperaturen, die von verschiedenen Bandstahlqualitäten herrühren, ergeben sich geänderte-Umsätze von Kohlendioxid mit Wasserstoff. Eine modifizierte Begasungsmenge an Kohlendioxid ist somit für jede Temperatur notwendig.

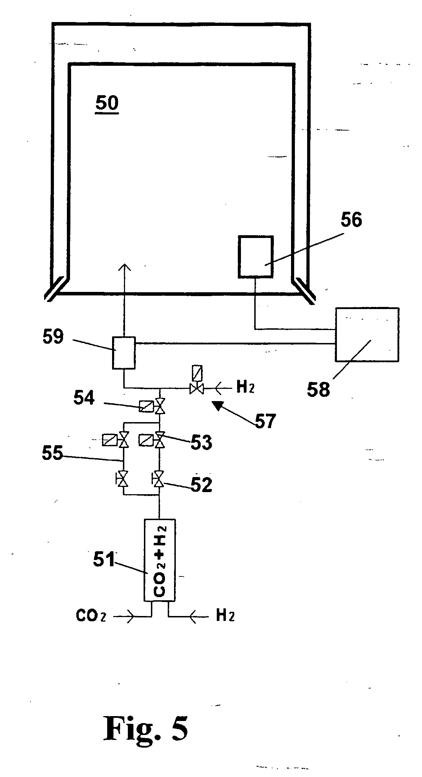

Zur näheren Erläuterung wird die Erfindung anhand des Schaubilds in **Figur 5** und eines weiteren, in der Praxis bewährten Ausführungsbeispiels beschrieben:

Figur 5 zeigt die Gasversorgung des Haubenofens 50 während der CO₂/H₂-Behandlung. Hierzu wird ein vorab in einem Witt-Mischgerät 51 erzeugtes Gasgemisch aus 25 Vol.-% CO₂ und 75 Vol.-% H₂ über ein Dosierventil 52, ein erstes Magnetventil 53 und ein weiteres, stromlos geschlossenes Sicherheitsventil 54 in den Haubenofen 50 eingeleitet. Es ist ein Bypass 55 vorgesehen, um eine zusätzliche Einleitung des Gasgemischs im Bedarfsfall zu ermöglichen. Im Ofenraum 50 ist eine Sauerstoffsonde 56 vorgesehen, mittels der die Sauerstoffaktivität im Ofenraum bei der jeweiligen Behandlungstemperatur gemessen wird. Die Sauerstoffsonde 56 ist mit einem Rechner 58 zur Regelung der Gasversorgung verbunden.

Für die Einleitung des Gasgemischs wird dieselbe Dosiereinrichtung eingesetzt, wie sie auch für die Einleitung von reinem Wasserstoff verwendet wird, wie dies schematisch durch die H₂-Leitung 57 angedeutet ist, die während der CO₂/H₂-Behandlung geschlossen ist. Die Dosiereinrichtung besteht im Wesentlichen aus einem Durchflussmess- und -regelgerät (Mass Flow Controller MFC) 59, das ebenfalls mit dem Rechner 58 verbunden ist.

Ca. 3 Stunden vor Ende der isothermen Wärmebehandlung wie sie in Figur 3 anhand des Temperaturverlaufs 3 und den Beginn der Abkühlphase 10 erkennbar ist, wird mit einer CO₂/H₂-Behandlung-Behandlung begonnen. Während dieser Zeit wird das sich im Ofenraum 50 eingestellte CO₂/CO-Verhältnis gasanalytisch mittels der Sauerstoffsonde 56 gemessen und auf einem voreingestellten Wert von 3,0 konstant gehalten. Das CO₂/CO-Verhältnis muss mindestens 1, 5 Stunden vor dem Beginn 10 der Abkühlphase größer 2 sein; bei einem niedrigeren Wert muss die CO₂-Gasmenge erhöht werden, damit zum Ende der Haltezeit das gewünschte Verhältnis stabil eingestellt ist.

Bei Ende der Haltezeit wird der Haubenofen 50 von seinem Sockel entfernt. Die H₂/CO₂-Zufuhr wird bei konstantem Mengenfluss von 20 m³/h beibehalten. Bei Erreichen einer Coiltemperatur von etwa 600°C wird die H₂/CO₂-Zufuhr gestoppt und der Haubeninnendruck von ca. 16 mbar durch schubweise Zufuhr von Wasserstoff (etwa 2 bis 3 m³/h) konstant gehalten.

Während der restlichen Abkühlphase muss das CO₂/CO/H₂O-haltige Wasserstoffgemisch verdünnt und aus dem Ofenraum 50 ausgetragen werden. Je nach Coiltemperatur und herrschendem H₂O/H₂-Verhältnis besteht ansonsten die Gefahr, dass die Bandoberfläche oxidiert wird (Fe₃O₄-Bildung). Die erforderliche Menge an zudosiertem Wasserstoff wird durch Zufuhr einer vorgegebene Gasmenge gewährleistet, wobei die Kontrolle, ob die Haubengasatmosphäre für Eisen oxidierend ist, mit Hilfe der installierten Sauerstoffsonde 56 erfolgt. Die auf jeden Fall zu unterschreitenden Grenzwerte für den Oxidationsgrad des CO₂/CO/H₂O-haltiges Wasserstoffgemisches hängen von den aktuellen Gegebenheiten ab; im konkreten Fall liegt der Grenzwert zum Beispiel bei einer Temperatur von 220°C bei einem H₂O/H₂-Verhältnis von 0,016, was einem Taupunkt der fast 100%igen Wassserstoffatmosphäre von +14°C entspricht (gleichbedeutend mit einem Wassergehalt von 1,60 Vol.-%).

## Patentansprüche

1. Verfahren zur Vermeidung von Klebern und Kratzern beim Rekristallisationsglühen von Kaltband in Haubenöfen unter einem Wasserstoff enthaltenden Schutzgas, mit den Phasen Aufheizen, Halten und Abkühlen, wobei während der Haltephase das Kaltband einer Atmosphäre mit einem oxidierend wirkenden Partialdruckverhältnis P(CO₂)/P(CO) > 1 ausgesetzt wird, das durch Zumischen eines Oxidationsmittels zum Schutzgas eingestellt wird, **dadurch gekennzeichnet, dass** das Oxidationsmittel mit einem Frischgas, das Kohlendioxid in einer Konzentration von maximal 40 Vol.-% und Wasserstoff enthält, zugeführt wird, wobei das Partialdruckverhältnis des sich bildenden Wassers und Wasserstoffs in der Ofenatmosphäre ermittelt und geregelt wird und wobei während der Abkühlphase eine Kohlenstoffaktivität von mindestens 100 eingestellt wird.

2. Verfahren nach Anspruch 1, **dadurch gekennzeichnet, dass** das Oxidationsmittel mit einem Frischgas, das Kohlendioxid in einer Konzentration von maximal 30 Vol.-% und Wasserstoff enthält, zugeführt wird.

3. Verfahren nach Anspruch 1 oder 2, **dadurch gekennzeichnet, dass** das Frischgas Kohlendioxid in einer Konzentration von weniger als 0,4 g Kohlendioxid pro m² an der Kaltbandoberfläche enthält.

4. Verfahren nach Anspruch 3, **dadurch gekennzeichnet, dass** das Frischgas Kohlendioxid in einer Konzentration von weniger als 0,3 g Kohlendioxid pro m² an Kaltbandoberfläche enthält.

5. Verfahren nach einem der vorhergehenden Ansprüche, **dadurch gekennzeichnet, dass** in einem Mischbehälter ein Gasgemisch aus Kohlendioxid und Wasserstoff bereitgestellt wird, und das Gasgemisch dem Haubenofen als Frischgas zugeführt wird.

6. Verfahren nach einem der vorhergehenden Ansprüche, **dadurch gekennzeichnet, dass** das Kaltband während der Abkühlphase in der CO₂/H₂-haltigen Ofenatmosphäre weiter behandelt wird, wobei das Behandlungsende in der CO₂/H₂-haltigen Ofenatmosphäre durch eine Coiltemperatur von nicht weniger als 450° C vorgeben wird.

7. Verfahren nach einem der vorhergehenden Ansprüche, **dadurch gekennzeichnet, dass** in der Ofenatmosphäre ein H₂O-Gehalt zwischen 4 und 8,5 Vol.-% eingestellt wird, mit der Maßgabe, dass ein Frischgas mit einer Zusammensetzung von mindestens 15 Vol.-% CO₂, Rest H₂ eingesetzt wird.

8. Verfahren nach einem der vorhergehenden Ansprüche, **dadurch gekennzeichnet, dass** das Partialdruckverhältnis von CO₂/CO zu Beginn der Abkühlphase auf einen Wert zwischen 2,5 und 4,0 eingestellt wird.

9. Verfahren nach einem der vorhergehenden Ansprüche, **dadurch gekennzeichnet, dass** zu Beginn der Abkühlphase eine Abkühlgeschwindigkeit von maximal 100°C/h, vorzugsweise von maximal 80°C/h, eingestellt wird.

10. Verfahren nach einem der vorhergehenden Ansprüche, **dadurch gekennzeichnet, dass** Magnetventile zum Abschalten und Einschalten der Frischgaszufuhr zum Haubenofen eingesetzt werden.

11. Verfahren nach einem der vorhergehenden Ansprüche, **dadurch gekennzeichnet, dass** das Partialdruckverhältnis des sich bildenden Wassers und Wasserstoffs in der Ofenatmosphäre mittels einer Sauerstoffsonde ermittelt wird.

## Claims

1. Method for avoiding stickers and scratches during the recrystallization annealing of cold strip in bell-type furnaces under a hydrogen-containing protective gas, comprising the phases of heating, holding and cooling, wherein during the holding phase the cold strip is exposed to an atmosphere having an oxidizing partial pressure ratio P(CO₂)/P(CO) > 1, which is established by admixing an oxidizing agent to the protective gas, **characterized in that** the oxidizing agent is supplied with a fresh gas containing carbon dioxide in a concentration of at most 40% by volume and hydrogen, wherein the partial pressure ratio of the water and hydrogen that form in the furnace atmosphere is determined and controlled, and wherein a carbon activity of at least 100 is established during the cooling phase.

2. Method according to Claim 1, **characterized in that** the oxidizing agent is supplied with a fresh gas containing carbon dioxide in a concentration of at most 30% by volume and hydrogen.

3. Method according to Claim 1 or 2, **characterized in that** the fresh gas contains carbon dioxide in a concentration of less than 0.4 g of carbon dioxide per m² of the cold strip surface.

4. Method according to Claim 3, **characterized in that** the fresh gas contains carbon dioxide in a concentration of less than 0.3 g of carbon dioxide per m² of cold strip surface.

5. Method according to one of the preceding claims, **characterized in that** a gas mixture of carbon dioxide and hydrogen is prepared in a mixing vessel, and the gas mixture is supplied to the bell-type furnace as fresh gas.

6. Method according to one of the preceding claims, **characterized in that** the cold strip is treated further during the cooling phase in the CO₂/H₂-containing furnace atmosphere, the end of the treatment in the CO₂/H₂-containing furnace atmosphere being predefined by a coil temperature of not less than 450°C.

7. Method according to one of the preceding claims, **characterized in that** an H₂O content of between 4 and 8.5% by volume is established in the furnace atmosphere, with the proviso that a fresh gas having a composition of at least 15% by volume CO₂, remainder H₂ is used.

8. Method according to one of the preceding claims, **characterized in that** the partial pressure ratio of CO₂/CO is established at a value of between 2.5 and 4.0 at the start of the cooling phase.

9. Method according to one of the preceding claims, **characterized in that** a cooling rate of at most 100°C/h, preferably of at most 80°C/h, is established at the start of the cooling phase.

10. Method according to one of the preceding claims, **characterized in that** solenoid valves are used to turn the fresh gas supply to the bell-type furnace on and off.

11. Method according to one of the preceding claims, **characterized in that** the partial pressure ratio of the water and hydrogen that form in the furnace atmosphere is determined by means of an oxygen sensor.

## Revendications

1. Procédé pour éviter l'apparition d'adhérences et d'éraflures lors du recuit de recristallisation d'une bande laminée à froid dans des fours à hotte sous un gaz protecteur contenant de l'hydrogène, comportant les phases de chauffage, maintien et refroidissement, la bande laminée à froid étant exposée à une atmosphère ayant un rapport entre les pressions partielles à action oxydante P(CO₂)/P(CO) > 1, ajustée par incorporation d'un agent oxydant dans le gaz protecteur, pendant la phase de maintien, **caractérisé en ce que** l'agent oxydant est introduit avec un gaz frais qui contient du dioxyde de carbone en une concentration d'au plus 40 % en volume et de l'hydrogène, le rapport entres les pressions partielles de l'eau et de l'hydrogène qui se forment dans l'atmosphère du four étant calculé et régulé, et une activité du carbone d'au moins 100 étant ajustée pendant la phase de refroidissement.

2. Procédé selon la revendication 1, **caractérisé en ce que** l'agent oxydant est introduit avec un gaz frais qui contient du dioxyde de carbone en une concentration d'au plus 30 % en volume et de l'hydrogène.

3. Procédé selon la revendication 1 ou 2, **caractérisé en ce que** le gaz frais contient du dioxyde de carbone en une concentration inférieure à 0,4 g de dioxyde de carbone par m² de surface de la bande laminée à froid.

4. Procédé selon la revendication 3, **caractérisé en ce que** le gaz frais contient du dioxyde de carbone en une concentration inférieure à 0,3 g de dioxyde de carbone par m² de surface de la bande laminée à froid.

5. Procédé selon l'une quelconque des revendications précédentes, **caractérisé en ce qu'**un mélange gazeux de dioxyde de carbone et d'hydrogène est préparé dans un contenant de mélange et le mélange gazeux est introduit dans le four à hotte en tant que gaz frais.

6. Procédé selon l'une quelconque des revendications précédentes, **caractérisé en ce que** la bande laminée à froid est traitée de manière supplémentaire pendant la phase de refroidissement dans l'atmosphère du four contenant du CO₂/H₂, la fin du traitement dans l'atmosphère du four contenant du CO₂/H₂ étant fixée par une température de serpentin supérieure ou égale à 450 °C.

7. Procédé selon l'une quelconque des revendications précédentes, **caractérisé en ce qu'**une teneur en H₂O comprise entre 4 et 8,5 % en volume est ajustée dans l'atmosphère du four, à condition qu'un gaz frais ayant une composition d'au moins 15% en volume de CO₂, le reste étant H₂, soit utilisé.

8. Procédé selon l'une quelconque des revendications précédentes, **caractérisé en ce que** le rapport entre les pressions partielles CO₂/CO est ajusté à une valeur comprise entre 2,5 et 4,0 au début de la phase de refroidissement.

9. Procédé selon l'une quelconque des revendications précédentes, **caractérisé en ce qu'**une vitesse de refroidissement d'au plus 100 °C/h, de préférence d'au plus 80 °C/h, est ajustée au début de la phase de refroidissement.

10. Procédé selon l'une quelconque des revendications précédentes, **caractérisé en ce que** des électrovalves sont utilisées pour l'arrêt et l'activation de l'introduction de gaz frais dans le four à hotte.

11. Procédé selon l'une quelconque des revendications précédentes, **caractérisé en ce que** le rapport entre les pressions partielles de l'eau et de l'hydrogène qui se forment dans l'atmosphère du four est calculé avec une sonde à oxygène.
